# EUROPEAN PATENT APPLICATION

(11) **EP 4 603 735 A1**
(43) Date of publication of application: **20.08.2025**
(21) Application number: 23876963.2
(22) Date of filing: 07.07.2023
(51) Int. Cl.: F16L 11/10

(54) **WIRE SPIRAL REINFORCED RUBBER HOSE**

(30) Priority: 14.10.2022 JP 2022165762
(71) Applicant: BRIDGESTONE CORPORATION, Chuo-ku Tokyo 104-8340 (JP)
(72) Inventor: KOTANAKA YOICHI, Tokyo 104-8340 (JP)
(74) Representative: Marks & Clerk LLP
(86) International application number: PCT/JP2023/025330
(87) International publication number: WO 2024/079954

(57) **Abstract**

Disclosed is a low-cost, flexible wire spiral reinforced rubber hose that does not cause occurrence of a pinhole burst. The wire spiral reinforced rubber hose includes a hose main body 10 that includes reinforcing layers 14, 16, 18, and 20 formed by helically wound wire bundles 31, 32 in which a plurality of metal wires 30 adjoin side by side, respectively. The wire density of the metal wires 30 in the reinforcing layers 14, 16, 18, and 20 is set at 40% or higher and 80% or lower, and the wire bundle spacing between the adjoining wire bundles 31, 32 is set at 1 mm or smaller, whereby an appropriate wire density having a pressure resistance that is not high but moderate is set.

## Description

### [Technical Field]

The present invention relates to a wire spiral reinforced rubber hose.

### [Background Art]

A wire spiral reinforced hose including a hose main body, which includes reinforcing layers with metal wires helically wound thereon, is excellent in high-pressure durability as disclosed, for example, in Patent Document 1, if the wire density, the wire number per unit area of the metal wires making up the reinforcing layers, is high.

### [Prior Art Document]

### [Patent Document]

[Patent Document 1]
JP 2017-106554 A

In Patent Document 1, there is disclosed a wire spiral reinforced hose including reinforcing layers with metal wires helically wound thereon, in which the wire density is as high as 90% or higher and 100% or lower.

If the wire density is high, the wire spiral reinforced hose is excellent in high-pressure durability, but is low in flexibility and is high in cost.

For an application where high-pressure durability is not required so much, a wire spiral reinforced hose that is high in wire density is costly, and its low flexibility restricts handling and leads to awkwardness.

There is accordingly an outstanding demand for wire spiral reinforced hoses that have a certain degree of pressure resistance, have flexibility, and are low in cost.

A wire spiral reinforce hose that has a moderate pressure resistance, has flexibility, and is low in cost can therefore be realized by lowering the wire density, although its pressure resistance is reduced.

### [Summary of the Invention]

### [Underlying Problems to be solved by the Invention]

A wire spiral reinforced hose is manufactured by drawing wire bundles, in each of which a predetermined number of metal wires adjoin side by side, from bobbins, and helically winding them.

In the case of a wire spiral reinforced rubber hose including reinforcing layers with metal wire bundles helically wound on intermediate rubber layers, a reduction in wire density means an increase in the spacing between the wire bundles, thereby facilitating occurrence of a pinhole burst that a fluid of high pressure pierces through the enlarged spacing between the wire bundles and then sticks out in a needle form.

Hence, the pressure (called a "pinhole BP") at which a pinhole burst occurs decreases if the wire density is reduced.

In a wire spiral reinforced rubber hose, the pressure (called "the hose main body BP") at which a hose main body bursts also decreases generally if the wire density is reduced.

The hose main body burst means that a plurality of metal wires are cut to cause a serious burst.

If the spacing between the wire bundles increases by a reduction in wire density, the pinhole BP may become lower than the hose main body BP because the pinhole BP has a greater reduction rate than the hose main body BP. Then, a pinhole burst is caused to occur before the hose main body bursts.

Even if the hose main body is in a condition that allows it to withstand a pressure, the occurrence of the pinhole burst makes the hose itself no longer usable.

With the foregoing problems in view, the present invention has, as an object thereof, the provision of a low-cost, flexible wire spiral reinforced rubber hose, which does not cause occurrence of a pinhole burst before a hose main body bursts, by setting an appropriate wire density having a pressure resistance that is not high but moderate.

### [Means to solve the Problems]

To achieve the above-described object, the present invention provides a wire spiral reinforced rubber hose including a hose main body that includes reinforcing layers with metal wires helically wound thereon, in which the reinforcing layers are each formed by helically wound wire bundles in which a plurality of metal wires adjoin side by side, respectively, a wire density of the metal wires in the reinforcing layers is 40% or higher and 80% or lower, and a wire bundle spacing between the adjoining wire bundles is 1 mm or smaller.

According to this configuration, the wire spiral reinforced rubber hose can be made low in cost while allowing the hose main body to have a pressure resistance which is not high but moderate and flexibility, as the wire density of the metal wires in the reinforcing layers is 40% or higher and 80% or lower, and owing to the setting at 1 mm or smaller, the wire bundle spacing between the adjoining wire bundles can also prevent the occurrence of a pinhole burst before the hose main body bursts.

In other words, if the wire density is 80% or higher, the hose main body loses flexibility, and the wire spiral reinforced rubber hose requires a high cost.

If the wire density is lower than 40%, the pinhole BP significantly decreases in particular, and a pinhole burst is prone to occur.

In a preferred embodiment of the present invention,
a wire diameter of the metal wires is 0.30 mm or greater and 0.80 mm or smaller.

According to this configuration, the number of the metal wires that each make up wire bundles to be helically wound can be set to 2 to 6, which is appropriate for helically winding the wire bundle with a high precision, by setting the wire diameter of the metal wires at 0.30 mm or greater and 0.80 mm or smaller.

In the preferred embodiment of the present invention, there are three or more but five or fewer layers as the reinforcing layers.

According to this configuration, the hose main body loses flexibility, and a high cost is required, if there are six or more layers as the reinforcing layers, and a pinhole burst is prone to occur along with a hose main body burst at a low pressure, which is excessively low as a wire spiral reinforced rubber hose, if there are two or fewer layers as the reinforcing layers.

### [Effects of the Invention]

The present invention allows the wire spiral reinforced rubber hose to have a low cost while the hose main body being provided with a pressure resistance, which is not high but moderate, and flexibility as the wire density of the metal wires in the reinforcing layers is 40% or higher and 80% or lower, and by setting, at 1 mm or smaller, the wire bundle spacing between the adjoining wire bundles, also makes it possible to prevent the occurrence of a pinhole burst before the hose main body bursts.

### [Brief Description of Drawings]

FIG. 1 is a perspective view depicting, in a partially broken manner, a hose main body of a wire spiral reinforced rubber hose according to an embodiment of the present invention.
FIG. 2 is a fragmentary enlarged view of a first reinforcing layer in the hose main body.
FIG. 3 is a fragmentary enlarged view of a reinforcing layer in a comparative example.
FIG. 4 is a schematic view of a wire winding machine.
FIG. 5A is a table presenting results of simulations of a pressure resistance performance test regarding comparative examples out of examples and comparative examples different in the structure of the reinforcing layer.
FIG. 5B is a table presenting results of simulations of the pressure resistance performance test regarding the examples out of the examples and comparative examples different in the structure of the reinforcing layer.
FIG. 6 is a graph presenting the pinhole BP with respect to the wire density regarding the examples and comparative examples.

### [Mode for carrying out the Invention]

A description will hereinafter be made about an embodiment according to the present invention.

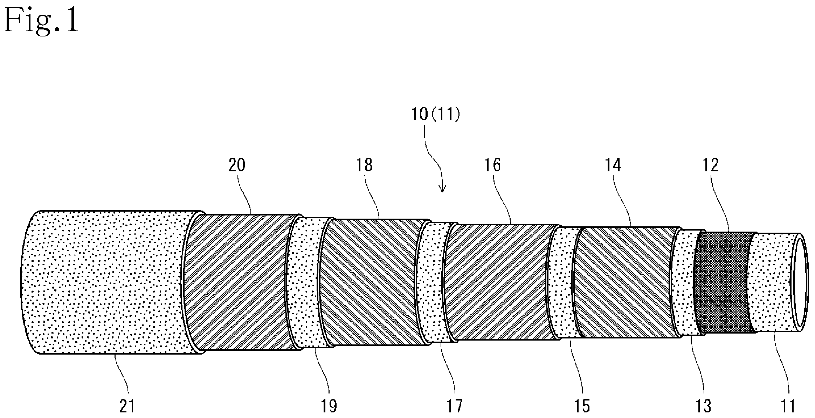

FIG. 1 is a perspective view depicting, in a partially broken manner, a hose main body 10 of a wire spiral reinforced rubber hose 1 according to the embodiment to which the present invention is applied.

The wire spiral reinforced rubber hose 1 is a hose to be used under medium to low pressures, and are used primarily in transportation or the like of a fluid or a material.

Referring to FIG. 1, the hose main body 10 of the wire spiral reinforced rubber hose 1 is provided on an inner side thereof with an inner tube rubber layer 11 formed of a tubular rubber member, and the inner tube rubber layer 11 is covered on an outer side thereof by lower threads 12.

The inner tube rubber layer 11 has a function to maintain the air tightness of a fluid flowing thereinside.

The lower threads 12 are those which are each formed of chemical fibers twisted together, and act as a cover to protect the inner tube rubber layer 11 when wires are wound thereon.

A first intermediate rubber layer 13 is disposed on an outer side of the lower threads 12, and a first reinforcing layer 14 is formed on an outer side of the first intermediate rubber layer 13.

Then, a second intermediate rubber layer 15 is disposed on an outer side of the first reinforcing layer 14, and a second reinforcing layer 16 is formed on an outer side of the second intermediate rubber layer 15.

Similarly, a third intermediate rubber layer 17 is disposed on an outer side of the second reinforcing layer 16, and a third reinforcing layer 18 is formed on an outer side of the third intermediate rubber layer 17. Further, a fourth intermediate rubber layer 19 is disposed on an outer side of the third reinforcing layer 18, and a fourth reinforcing layer 20 is formed on an outer side of the fourth intermediate rubber layer 19.

An outer covering rubber layer 21 is disposed on an outer side of the fourth reinforcing layer 20, and the hose main body 10 is covered at an outer circumferential surface thereof by the outer covering rubber layer 21.

Accordingly, the first to fourth intermediate rubber layers 13, 15, 17, and 19 and the first to fourth reinforcing layers 14, 16, 18, and 20 are alternately stacked between the lower threads 12, which cover the inner tube rubber layer 11, and the outer covering rubber layer 21.

The hose main body 10 therefore has the four reinforcing layers 14, 16, 18, and 20.

The first to fourth reinforcing layers 14, 16, 18, and 20 are layers on which metal wires 30 are helically wound, and have a function to maintain the proof pressure of the hose.

The first to fourth intermediate rubber layers 13, 15, 17, and 19 prevent the reinforcing layers themselves from scraping each other and undergoing abrasion.

The outer covering rubber layer 21 has weatherability and abrasion resistance to protect the reinforcing layers from external environments.

The first to fourth reinforcing layers 14, 16, 18, and 20 of this wire spiral reinforced rubber hose 1 are layers on which the metal wires 30 are helically wound on respective outer circumferential surfaces of the first to fourth intermediate rubber layers 13, 15, 17, and 19. Their helix diameters sequentially increase, but they all have the same helical structure.

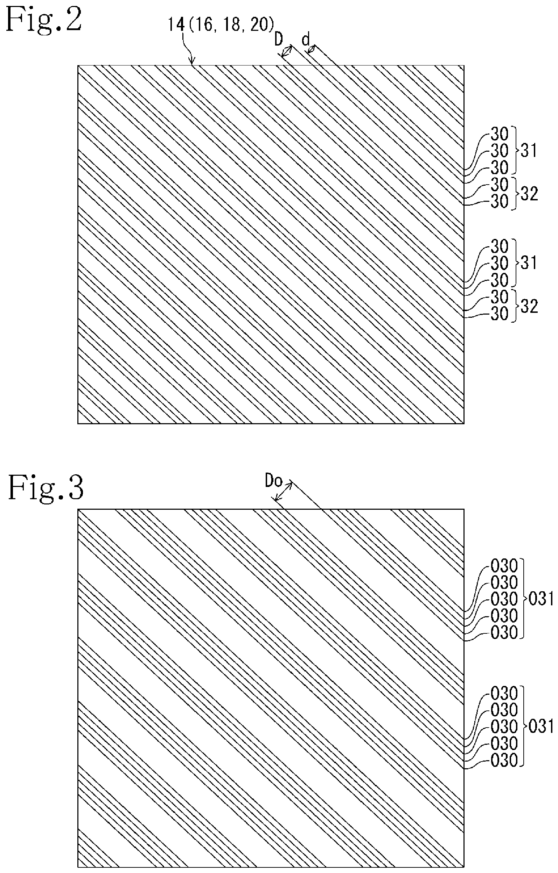

A fragmentary enlarged view of the first reinforcing layer 14 is depicted in FIG. 2.

As depicted in FIG. 2, wire bundles 31 each consisting of three adjoining metal wires 30 bundled in one bundle and wire bundles 32 each consisting of two adjoining metal wires 30 bundled in one bundle are alternately and helically wound.

As spacings between the wire bundles 31 and the wire bundles 32 themselves, large inter-bundle spacings D and small inter-bundle spacings d are alternately formed.

FIG. 3 presents a comparative example in which, for the sake of a comparison with the reinforcing layers 14, 16, 18, and 20, wire bundles 031 each consisting of five adjoining metal wires 030 bundled in one bundle are helically wound, and is a fragmentary enlarged view corresponding to FIG. 2.

Inter-bundle spacings Do of the wire bundles 031 themselves are constant.

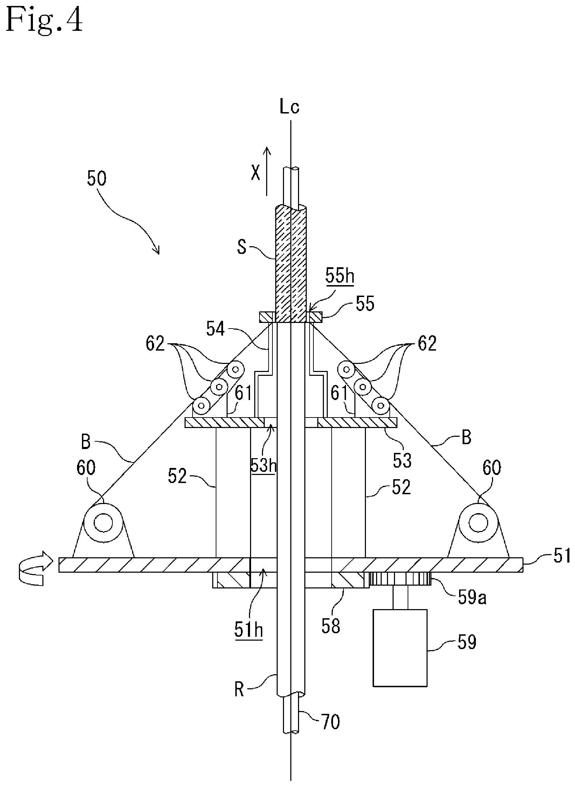

A wire winding machine 50 that helically winds the above-described wire bundles 31 and wire bundles 32 is depicted in FIG. 4, and will be described.

On a front surface of a rotary disk 51, a roller-supporting disk 53 is supported about a common central axis Lc via a support column 52, and on the roller-supporting disk 53, an annular winding-position determining guide 55 is supported, also with the common central axis Lc, via a leg member 54.

The rotary disk 51, the roller-supporting disk 53, and the winding-position determining guide 55 are stacked, with the common central axis Lc, one over another in this order, and their outer diameters decrease sequentially.

On a back surface of the rotary disk 51, a gear 58 is integrally disposed at a central portion, and the gear 58 is in meshing engagement with a drive gear 59a of the drive motor 59.

When the motor 59 rotates the drive gear 59a, the gear 58 that is in meshing engagement with the drive gear 59a hence rotates along with the rotary disk 51, so that the roller-supporting disk 53 and winding-position determining guide 55, which are integral with the rotary disk 51, both rotate.

The rotary disk 51, the roller-supporting disk 53, and the winding-position determining guide 55 have central holes 51h, 53h, and 55h in their central portions through which the central axis Lc passes, and a mandrel 70 extends along the central axis Lc through the central holes 51h, 53h, and 55h.

The mandrel 70 is inserted into the inner tube rubber layer 11, and supports, on the central axis Lc, the hose during manufacture of the hose, the hose being covered on an outer side thereof by an intermediate rubber layer R via the lower threads 12 on the outer side of the inner tube rubber layer 11.

By moving the mandrel 70 in the direction of an arrow X along the central axis Lc, and at the same time, extruding the intermediate rubber layer R along with the inner tube rubber layer 11 onto the mandrel 70 by an undepicted extruder, the intermediate rubber layer R is supported with the mandrel 70 inserted therein, and is extruded in the direction of the arrow X through the central holes 51h, 53h, and 55h.

On the rotary disk 51, a plurality of bobbins 60 with wire bundles B, in which a plurality of metal wires 30 adjoin side by side, respectively, wound thereon are arranged at constant intervals in a circumferential direction.

On the roller-supporting disk 53, roller supports 61 are arranged at locations corresponding to the respective bobbins 60, and guide rollers 62 are attached to the roller supports 61, respectively.

While rotating, the guide roller 62 of each roller support 61 guides the wire bundle drawn from the corresponding bobbin 60, and leads it to a predetermined location inside the annular winding-position determining guide 55.

This winding-position determining guide 55 is provided, on an inner side of an annular structure thereof, with undepicted comb teeth in the form of teeth of a comb, which divide each wire bundle B into two.

The rotary disk 51, the roller-supporting disk 53, and the winding-position determining guide 55 integrally rotate centering around the central axis Lc, and at the same time, the intermediate rubber layer R is supported with the mandrel 70 inserted therein, and is extruded in the direction of the arrow X through the respective central holes 51h, 53h, and 55h of the rotary disk 51, the roller-supporting disk 53, and the winding-position determining guide 55.

During this step, the wire bundles B continuously drawn from the respective bobbins 60 on the rotating rotary disk 51 are guided by the corresponding guide rollers 62 and led to the predetermined locations on the winding-position determining guide 55, are divided by the comb teeth, and are progressively wound in a helical form on the intermediate rubber layer R moving in the direction of the arrow X, so that a reinforcing layer S is formed.

In the case of this embodiment, the wire bundler B wound on each bobbin 60 is a bundle of five metal wires 30, and the wire bundle of the five adjoining metal wires 30 bundled in one bundle is divided by the comb teeth into the wire bundle 31 of the three metal wires 30 and the wire bundle 32 of the two metal wires 30.

The first reinforcing layer 14 formed by helically winding the wire bundles 31 and the wire bundles 32 on the first intermediate rubber layer 13 as described above is depicted in FIG. 1 and FIG. 2.

On the other hand, the reinforcing layer in the comparative example as depicted in FIG. 3 is a reinforcing layer formed by helically winding the wire bundles 031, each of which consists of the five adjoining metal wires 030 bundled in one bundle, on the intermediate rubber layer without division.

Therefore, the reinforcing layer in the comparative example is one formed by helically winding the wire bundles 031 on the intermediate rubber layer without division under the same conditions, except that, in the wire winding machine 50 depicted in FIG. 4, a winding-position determining guide provided with no comb teeth is used instead of the winding-position determining guide 55 provided with the comb teeth.

The large bundle spacing D between the wire bundles 31 and the wire bundles 32 themselves in the first reinforcing layer 14 in this embodiment as depicted in FIG. 2 is smaller than the bundle spacing Do between the wire bundles 031 themselves in the reinforcing layer in the comparative example as depicted in FIG. 3.

This is because, by dividing each wire bundle 031 in which the five metal wires 030 are bundled in one bundle into the wire bundle 31 in which the three metal wires 30 are bundled in one bundle and the wire bundle 32 in which the two metal wires 30 are bundled in one bundle, the small inter-bundle spacing d is formed between the wire bundles 31 and the wire bundles 32, and the bundle spacing Do formed when not divided is thus made smaller to form the large spacing D (<Do).

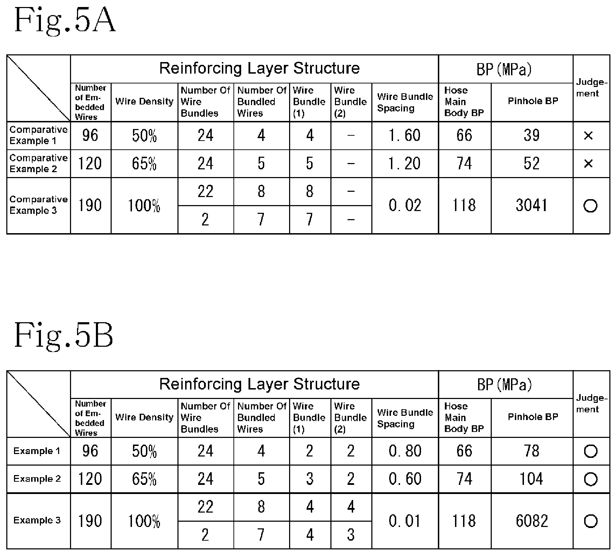

FIG. 5A and FIG. 5B are tables presenting results of simulations of a pressure resistance performance test on different examples of the structure of reinforcing layers of a wire spiral reinforced rubber hose, and FIG. 5A presents the results of simulations on three comparative examples 1, 2, and 3, and FIG. 5B presents the results of simulations on three examples 1, 2, and 3.

The wire spiral reinforced rubber hose subjected to the simulations has the structure depicted in FIG. 1, in which the inner tube rubber layer 11, the lower threads 12, the first intermediate rubber layer 13, the first reinforcing layer 14, the second intermediate rubber layer 15, the second reinforcing layer 16, the third intermediate rubber layer 17, the third reinforcing layer 18, the fourth intermediate rubber layer 19, the fourth reinforcing layer 20, and the outer covering rubber layer 21 are stacked in this order from an inner side toward an outer side.

Conditions of the wire spiral reinforced rubber hose are as follows.
Hose inner diameter: 32 mm
Thickness of inner tube rubber layer: 1.0 mm (0.9 to 1.5 mm)
Thicknesses of first, second, third, and fourth intermediate rubber layers: 0.17 mm (0.07 to 0.27 mm)
Thickness of outer covering rubber layer: 1.30 mm (0.40 to 2.20 mm)
Material of inner tube rubber layer: NBR rubber compound
Material of first, second, third, and fourth intermediate rubber layers: NBR rubber compound
Material of outer covering rubber layer: CR rubber compound
Wire diameter of metal wires of first, second, third, and fourth reinforcing layers: 0.38 mm

It is to be noted that the above-described values in round brackets indicate preferred thicknesses of the rubber layers.

In the tables of FIG. 5A and FIG. 5B, the term "number of embedded wires" in the reinforcing layer structure means the number of the metal wires 30 laid in one pitch of the helix of the helically wound metal wires 30, and "wire density" means the wire number per unit area of the metal wires making up the reinforcing layers.

The term "number of wire bundles" means the number of wire bundles drawn from the bobbins, and is equivalent to the number of the bobbins, and the term "number of bundled wires" means the number of metal wires making up the wire bundle wound on one bobbin.

Example 2 in the table of FIG. 5B is the simulation of the pressure resistance performance test on the hose main body 10 of the wire spiral reinforced rubber hose 1 of this embodiment described above and depicted in FIG. 1 and FIG. 2.

Comparative Example 2 in the table of FIG. 5A corresponds to a comparative example having reinforcement layers, in each of which the wire bundle 031 with the above-described five adjoining metal wires 030 bundled in one bundle is helically wound, and a fragmentary enlarged view of the reinforcement layer is presented in FIG. 3.

Example 2 in the table of FIG. 5B and Comparative Example 2 in the table of FIG. 5A have the same structure in which the number of embedded wire is 120, the wire density is 65%, the number of wire bundles is 24, and the number of bundled wires is 5. In Comparative Example 2, however, the wire bundle of five metal wires drawn from each bobbin is helically wound on the intermediate rubber layer as it is without division, whereas in Example 2, the wire bundle of five metal wires drawn from each bobbin is helically wound on the intermediate rubber layer after dividing the wire bundle into a wire bundle (1) of three metal wires and a wire bundle (2) of two metal wires.

In Comparative Example 2, the wire bundle spacing Do indicated in FIG. 3 is 1.20 mm. In Example 2, on the other hand, the wire bundle spacing D indicated in FIG. 2 is 0.60 mm, and is significantly smaller.

In Comparative Example 2, the hose main body BP as the pressure at which the hose main body bursts is 74 MPa, while the pinhole BP as the pressure at which a pinhole burst occurs is 52 MPa, and is a pressure lower than the hose main body BP.

In Example 2, on the other hand, the hose main body BP is 74 MPa, while the pinhole BP is 104 MPa, and is a pressure lower than the hose main body BP.

In Example 2 and Comparative Example 2, the hose main bodies 10 both have a wire density of 65%, both have a hose main body BP of 74 MPa, that is, a pressure resistance that is not high but moderate, have flexibility, and are low in cost.

In Comparative Example 2, however, the wire bundle spacing Do is 1.20 mm, and the pinhole BP is 52 MPa, that is, a pressure substantially lower than 74 MPa as the hose main body BP, so that a pinhole burst occurs before the hose main body bursts.

In Example 2, on the other hand, the wire bundle spacing D is 0.60 mm, and the pinhole BP is 104 MPa, that is, a pressure higher than 74 MPa as the hose main body BP, so that it is possible to prevent occurrence of a pinhole burst before bursting of the hose main body.

Comparative Example 1 in the table of FIG. 5A and Example 1 in the table of FIG. 5B will next be considered.

Example 1 and Comparative Example 1 have the same structure in which the number of embedded wire is 96, the wire density is 50%, the number of wire bundles is 24, and the number of bundled wires is 4. In Comparative Example 1, however, the wire bundle of four metal wires drawn from each bobbin is helically wound on the intermediate rubber layer as it is without division, whereas in Example 1, the wire bundle of four metal wires drawn from each bobbin is helically wound on the intermediate rubber layer after dividing the wire bundle into a wire bundle (1) and a wire bundle (2), each of which has two metal wires.

In Comparative Example 1, the wire bundle spacing is 1.60 mm. In Example 1, on the other hand, the wire bundle spacing is 0.80 mm, and is significantly smaller.

Therefore, in Comparative Example 1, the hose main body BP is 66 MPa, while the pinhole BP is 39 MPa, and is a pressure lower than the hose main body BP.

In Example 1, on the other hand, the hose main body BP is 66 MPa, while the pinhole BP is 78 MPa, and is a pressure higher than the hose main body BP.

In Example 1 and Comparative Example 1, the hose main bodies 10 both have a wire density of 50%, both have a hose main body BP of 66 MPa, that is, a pressure resistance that is not high but moderate, have flexibility, and can still be low in cost.

In Comparative Example 1, however, the wire bundle spacing is 1.60 mm, and the pinhole BP is 39 MPa, that is, a pressure lower than 66 MPa as the hose main body BP, so that a pinhole burst occurs before the hose main body bursts. Despite the hose main body is in a precious condition that allows it to withstand a pressure, the hose itself is rendered no longer usable.

In Example 1, on the other hand, the wire bundle spacing is 0.80 mm, and the pinhole BP is 78 MPa, that is, a pressure higher than 66 MPa as the hose main body BP, so that it is possible to prevent occurrence of a pinhole burst before bursting of the hose main body.

Comparative Example 3 in the table of FIG. 5A and Example 3 in the table of FIG. 5B will next be considered.

Example 3 and Comparative Example 3 have the same structure in which the number of embedded wire is 190, the wire density is 100%, and two kinds of bobbins exist together, one bobbin having 22 wire bundles and eight bundled wires, the other bobbin having two wire bundles and seven bundled wires.

In Comparative Example 3, however, the wire bundles of eight metal wires and the wire bundles of seven metal wires drawn from the respective bobbins are helically wound on the intermediate rubber layer as they are without division, whereas in Example 3, the wire bundle of eight metal wires drawn from each corresponding bobbin is divided into a wire bundle (1) and a wire bundle (2), each of four metal wires, and the wire bundle of seven metal wires drawn from each corresponding bobbin is divided into a wire bundle (1) of four metal wires and a wire bundle (2) of three metal wires, followed by being helically wound on the intermediate rubber layer.

In Example 3 and Comparative Example 3, the wire densities are both 100%, and the hose main body BPs are both 118 MPa, that is, a high pressure.

Therefore, in Example 3 and Comparative Example 3, the hose main bodies 10 have pressure resistance in which their hose main body BPs are high, but have a wire density of 100%, lack flexibility, and are costly.

It is to be noted that, in Comparative Example 3, the wire density is 100%, the wire bundle spacing is as small as 0.02 mm, and the pinhole BP is 3041 MPa, that is, an extremely high pressure.

In Example 3, the wire density is also 100%, the wire bundle spacing is as small as 0.01 mm, and the pinhole BP is 6082 MPa, that is, a still higher pressure.

It is therefore Examples 1, 2, and 3 and Comparative Example 3 that the pinhole BP is higher than the hose main body BP, and the occurrence of a pinhole burst can be prevented before the hose main body bursts.

In Example 3 and Comparative Example 3, however, the wire density is 100%, and therefore the hose main bodies 10 are for high-pressure durable applications, lack flexibility, and require a high cost.

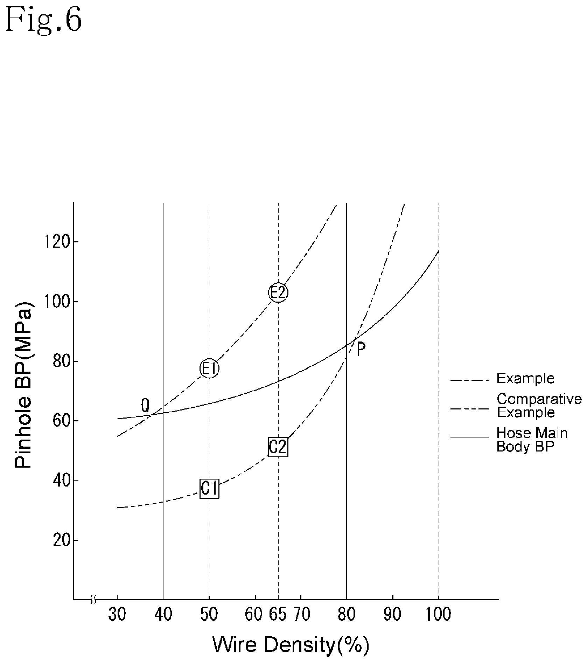

FIG. 6 presents the results of Examples 1, 2, and 3 and Comparative Examples 1, 2, and 3 as presented in coordinates that the wire density is plotted along the abscissa and the pinhole BP is plotted along the ordinate, and is a graph presenting the pinhole BP with respect to the wire density.

The wire density is 50%, and the pinhole BP is 78 MPa in Example 1. Therefore, the wire density and the pinhole BP are plotted at a point E1 in the coordinates of FIG. 6. Similarly, Example 2 is plotted at a point E2.

In Example 3 in which the wire density is 100%, however, the pinhole BP is 6082 MPa, that is, excessively high, so that a point E3 cannot be presented in the coordinates of FIG. 6.

The wire density is 50%, and the pinhole BP is 78 MPa in Comparative Example 1. Therefore, the wire density and the pinhole BP are plotted at a point C1 in the coordinates of FIG. 6. Similarly, Comparative Example 2 is plotted at a point C2.

In Comparative Example 3 in which the wire density is 100%, however, the pinhole BP is 3041 MPa, that is, excessively high, so that a point C3 cannot be presented in the coordinates of FIG. 6.

In the coordinates of FIG. 6, a curve that connects the point E1, point E2, and point E3 indicating the results of Examples 1, 2, and 3 is represented by a single-dot chain line, and a curve that connects the point C1, point C2, and point C3 indicating the results of Comparative Examples 1, 2, and 3 is represented by a two-dot chain line.

In the coordinates of FIG. 6, hose main body BPs at wire densities of 50%, 65%, and 100% can be plotted, and a curve connecting their respective points is represented by a solid line.

It is to be noted that the hose main body BP at the wire density of 100% cannot be presented in the coordinates of FIG. 6.

In view of the graph presented in FIG. 6, the occurrence of a pinhole burst cannot be prevented before bursting of the hose main body unless the pinhole BP exists above the solid line curve of the hose main body BP.

Concerning comparative examples including Comparative Examples 1 and 2, the pinhole BP is a pressure lower than the hose main body BP at a wire density smaller than the wire density at a point P where the curve of the two-dot chain line intersects the solid line curve of the hose main body BP, and therefore the occurrence of a pinhole burst cannot be prevented before bursting of the hose main body.

Concerning examples including Examples 1 and 2, the pinhole BP is a pressure higher than the hose main body BP at a wire density higher than the wire density at a point Q where the curve of the single-dot chain line intersects the solid line curve of the hose main body BP intersect each other, and the occurrence of a pinhole burst can be prevented before bursting of the hose main body.

At the point P where the curve of the two-dot chain line of the comparative examples and the solid line curve of the hose main body BP, the wire density is approximately 80%, and at the point Q where the curve of the single-dot chain line of the examples and the solid line curve of the hose main body BP intersect each other, the wire density is approximately 40%.

If the wire density is 40% or higher and 80% or lower, the pinhole BP is hence a pressure higher than the hose main body BP with respect to a wire spiral reinforced rubber hose that includes a hose main body having reinforcing layers of a 1 mm or smaller wire bundle spacing as in Examples 1 and 2, and therefore the occurrence of a pinhole burst can be prevented before bursting of the hose main body.

If the wire density is 80% or higher, the hose main body 10 loses flexibility, and requires a high cost.

It is to be noted that the wire density is desirably 50% or higher.

In addition, taking into account the deterioration through long-term use of a wire spiral reinforced rubber hose, the wire bundle spacing is more preferably 0.8 mm or smaller.

The wire diameter of metal wires is only required to be 0.30 mm or greater and 0.80 mm or smaller, although the wire diameters of the metal wires in Examples 1 and 2 are 0.38 mm.

If the wire diameter of metal wires is 0.30 mm or greater and 0.80 mm or smaller, the number of metal wires that each make up wire bundles to be helically wound on an intermediate rubber layer may be set to 2 to 6, which is appropriate for helically winding the wire bundle with a high precision.

The reinforcing layers are only required to be three layers or more and five layers or fewer, although there are the four reinforcing layers of the first to fourth reinforcing layers 14, 16, 18, and 20 in Examples 1 and 2.

If there are six or more reinforcing layers, the hose main body 10 lacks flexibility, and requires a high cost.

If there are two or fewer reinforcing layers, on the other hand, a pinhole burst is prone to occur along with bursting of a hose main body at a pressure that is too low as a wire spiral reinforced rubber hose.

While keeping a conventional number of wire bundles (number of bobbins), reinforcing layers having a wire bundle spacing of 1 mm or smaller can be easily formed by dividing, with dividing means like a comb teeth, the wire bundles drawn from bobbins and helically winding the divided wire bundles on intermediate rubber layers to form the reinforcing layers as in the wire winding machine 50 depicted in FIG. 4.

The wire spiral reinforced rubber hose according to the embodiment of the present invention has been described above. However, the mode of the present invention is not limited to the above-described embodiment, and includes those to be practiced in various manners within the scope of the spirit of the present invention.

### [Reference Signs List]

1 ... Wire spiral reinforced rubber hose, 10 **...** Hose main body, 11 ... Inner tube rubber layer, 12 ... Lower threads, 13 ... First intermediate rubber layer, 14 ... First reinforcing layer, 15 ... Second intermediate rubber layer, 16 ... Second reinforcing layer, 17 ... Third intermediate rubber layer, 18 ... Third reinforcing layer, 19 ... Fourth intermediate rubber layer, 20 ... Fourth reinforcing layer, 21 ... Outer covering rubber layer, 30 ... Metal wire, 31 ... Wire bundle, 32 ... Wire bundle, 50 ... Wire winding machine, 51 ... Rotary disk, 52 ... Support column, 53 ... Roller-supporting disk, 54 ... Leg member, 55 ... Winding-position determining guide, 58 ... Gear, 59 ... Drive motor, 60 ... Bobbin, 61 ... Roller support, 62 ... Guide roller, 030 ... Metal wire, 031 ... Wire bundle, B ... Wire bundle, R ... Intermediate rubber layer, S ... Reinforcing layer.

## Claims

1. A wire spiral reinforced rubber hose comprising:
a hose main body (10) that includes reinforcing layers (14, 16, 18, 20) with metal wires (30) helically wound thereon, wherein
the reinforcing layers (14, 16, 18, 20) are each formed by helically wound wire bundles (31, 32) in which a plurality of metal wires (30) adjoin side by side, respectively,
a wire density of the metal wires (30) in the reinforcing layers (14, 16, 18, 20) is 40% or higher and 80% or lower, and
a wire bundle spacing between the adjoining wire bundles (31, 32) is 1 mm or smaller.

2. The wire spiral reinforced rubber hose according to claim 1, wherein a wire diameter of the metal wires (30) is 0.30 mm or greater and 0.80 mm or smaller.

3. The wire spiral reinforced rubber hose according to claim 1 or 2, wherein, as the reinforcing layers (14, 16, 18, 20), there are three or more but five or fewer layers.
